Europäisches Patentamt

(19) European Patent Office

Office européen des brevets

(11) Publication number: **0 057 037**
**B1**

(12) **EUROPEAN PATENT SPECIFICATION**

(45) Date of publication of patent specification: **21.11.84**

(51) Int. Cl.³: **A 01 G 9/22**

(21) Application number: **82200061.8**

(22) Date of filing: **18.01.82**

(54) Greenhouse insulation apparatus.

(30) Priority: **20.01.81 NL 8100255**

(43) Date of publication of application:
**04.08.82 Bulletin 82/31**

(45) Publication of the grant of the patent:
**21.11.84 Bulletin 84/47**

(84) Designated Contracting States:
**BE DE FR GB NL SE**

(56) References cited:
**DE-A-1 911 301**
**FR-A-1 327 668**
**FR-A-2 282 027**
**US-A-3 294 150**

(73) Proprietor: **Dekker, Hendrik**
**155, Schutstraat**
**NL-7907 CD Hoogeveen (NL)**

(72) Inventor: **Dekker, Hendrik**
**155, Schutstraat**
**NL-7907 CD Hoogeveen (NL)**

(74) Representative: **Konings, Lucien Marie Cornelis**
**Joseph et al**
**OCTROOIBUREAU ARNOLD & SIEDSMA**
**Sweelinckplein 1**
**NL-2517 GK Den Haag (NL)**

Courier Press, Leamington Spa, England.

## Description

The invention relates to a greenhouse insulation apparatus as indicated in the heading of claim 1.

Such an apparatus is known from US—A—3294150.

The insulation strip thereof is rolled on the outside of a roof, over downwardly inclined guide rails. This insulation strip is provided for insulating the greenhouse against sunrays.

FR—A—1327668 discloses a greenhouse insulation apparatus mainly solely consisting of an insulation strip, having folds distributed along its length and formed by a blanket which on both sides is bounded by a synthetic resin foil and which is filled with insulation material. In its rest position, this blanket is zig-zagly folded.

FR—A—2282027 discloses a greenhouse insulation apparatus, having an insulation strip, which is guided over horizontal rails by means of guide members cooperating with the rails mentioned. In its rest position the insulation strip is zig-zagly folded.

The invention relates to a greenhouse insulation apparatus and has for its object to provide an insulation strip which improves the thermal insulation of the greenhouse and which can be readily applied and removed as desired.

For this purpose the invention provides an improvement apparatus as claimed in claim 1. This apparatus provides a good heat insulation of the covered surface and although its insulation strip is quite voluminous, it can be easily moved from its insulating position into its rolled-up position.

A further developed embodiment of the apparatus according to the invention is described in the subclaims.

The insulation strip of the apparatus according to the invention is particularly important for occupying an insulating position when the heat given out exceeds the heat obtained by solar radiation. For this purpose the apparatus according to the invention is characterized by a light detector controlling the reel and the winch for winding the insulation strip on and off respectively.

The reel is preferably disposed on the outer side of the greenhouse in order to save precious space for cultures in the greenhouse. The insulation strip can thus be used at the same time for protecting the glass against hail.

By using insulation apparatuses according to the invention on a greenhouse an appreciable saving of heating costs can be achieved.

In order to minimize penetration of solar light the reel is preferably disposed on the North side of the greenhouse.

The invention will be described more fully hereinafter with reference to a drawing.

The drawing shows in

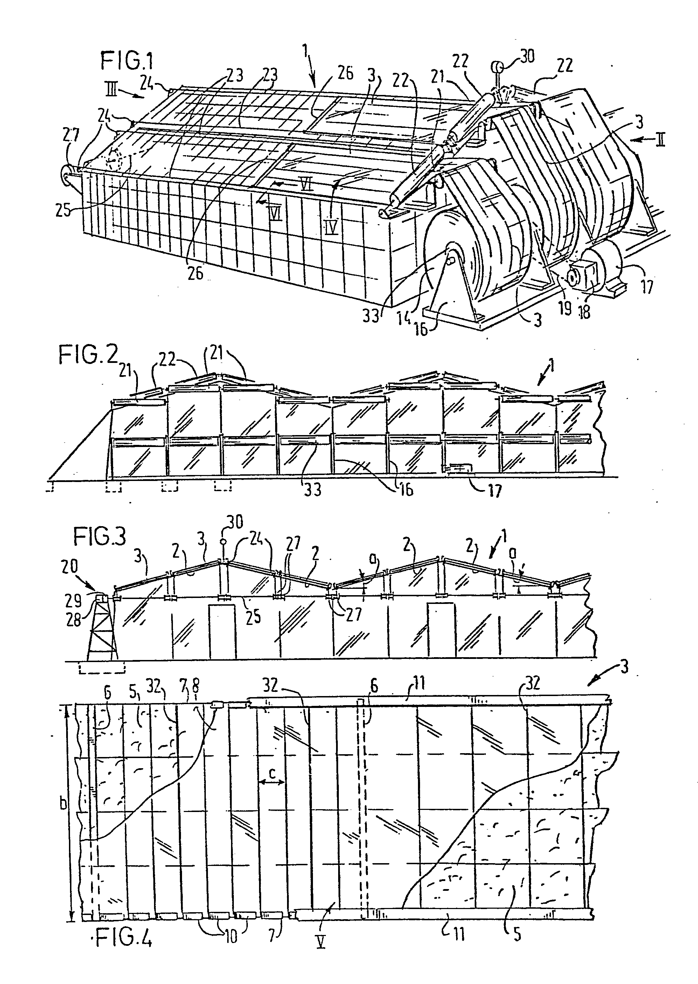

Fig. 1 a perspective view of a greenhouse embodying the insulation apparatus in accordance with the invention,

Figs. 2 and 3 elevational views in the direction of the arrows II and III respectively of Fig. 1,

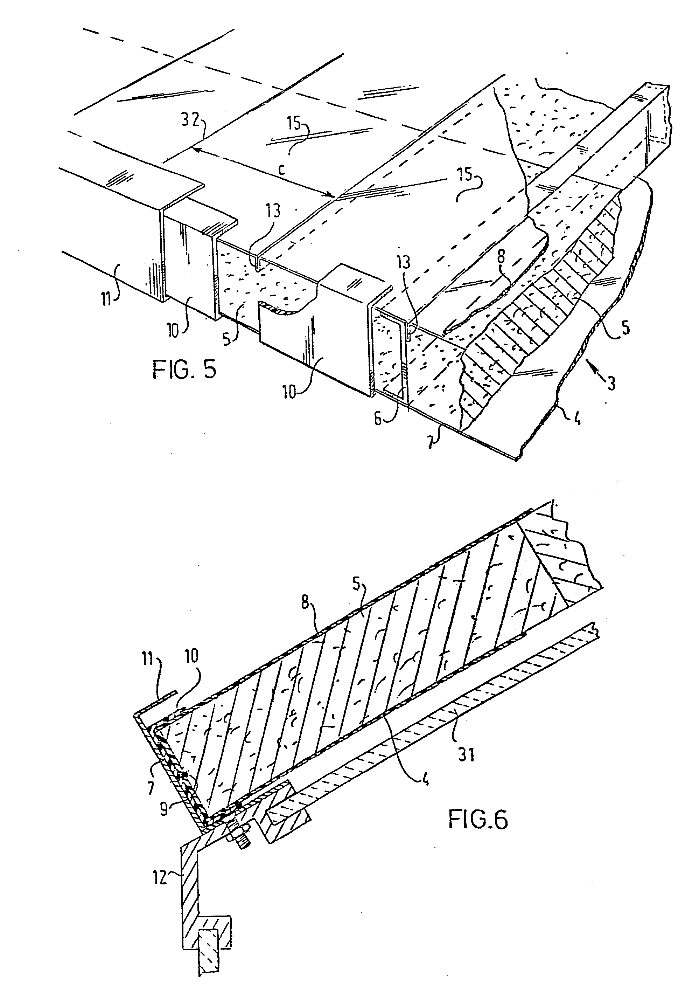

Fig. 4 an enlarged plan view, partly broken away, of detail IV of Fig. 1,

Fig. 5 an enlarged, perspective view, partly broken away, of detail V of Fig. 4 and

Fig. 6 an enlarged sectional view taken on the line VI—VI of Fig. 1.

A greenhouse 1 has a sequence of adjacent roof surfaces 2 at opposite angles of inclinations $a$, each surface being covered by two insulation strips 3.

Each insulation strip is formed by a blanket bilaterally bounded by synthetic resin foil 4, 8, preferably propylene tissue and filled out with insulation material 5, preferably polystyrene foam. Transverse rods 6, for example, formed by U-shaped steel or aluminium profiles, spaced apart along the length of the insulation strip 3 by intervals of, for example, 1 metre, maintain the side edges 7 of the insulation strip at the given distance $b$. At the side edges the foils 4 and 8 are welded together by a thermal weld 9 and are, moreover, fastened at said place to a sequence of guide members 10 each formed by lengths of channel-section profiles of synthetic resin. In guiding the guide members 10 cooperate with guide rails 11 extending in a horizontal direction of length and formed by channelsection metal profiles fastened to the frame 12 of the greenhouse 1. The filling material 5 preferably consists of blocks arranged between transverse folds 13 of the upper foil 8. Owing to these transverse folds 13 between the guide members 10 the foil 8 is longer than foil 4 and the insulation strip 3 can be wound on a reel 14. The insulation strip 3 may be considered to be an array of fairly rigid cushions 15 having a width $c$ of, for example, 20 cms, pivotally interconnected at the folds 13. The folds 13 are deeper the nearer they are to the reel 14.

At every fifth block the foils 4 and 8 are welded by means of a transverse weld 32 in order to enclose the filling 5 in a direction of length.

Although the insulation strips 3 are lying, in their insulating position, on an inclined roof surface 2, the reel 14 is arranged horizontally. The reel 14 can thus serve as a long, common reel for a large number of adjacent insulation strips 3. The core 33 of the reel 14 is rotatably journalled in bearing stools 16 and is driven by an electric motor 17 through a reducing gear 18 and a chain drive 19 for winding up the insulation strips 3. From the reel 14 each insulation strip 3 is guided along a horizontal guide roller 21 and a guide roller 22 arranged parallel to the slope of the roof surface 2. For winding off a traction device 20 is provided, which comprises for each insulation strip 3 two draw cables 23 wound on a winch 25 and engaging an end edge 26 of the insulation strip 3. This end edge may be formed by a metal profile. The winch 25 serves as a long, horizontal, common winch for winding up the draw cables 23 of the large number of insulation strips 3. The draw cables 23 located in the rails 11 are guided by guide pulleys 24 towards winch drums 27. The winch 25 is driven through a reducing gear 29 by an electric motor 28, which is preferably controlled automatically like the motor 17 by a light detector 30, which actuates the motor 28 at a transgression of the minimum limit of sunlight for winding off the insulation strips 3 and which actuates the motor 17 at a transgression of a maximum limit for winding up the insulation strips 3. The light detector 30 may be formed by a photo-electric cell disposed on the roof or, preferably, on the outer side within reach of the hand. The motors 17 and 28 may as an alternative be actuated by a manual switch, for example, for covering the glass 31 when a hail shower or excessively fierce sunlight is expected.

The insulation strip 3 may be provided on one or on both sides with a reflecting coating, for example, of aluminium foil.

## Claims

1. A greenhouse insulation apparatus, at least comprising an insulation strip (3) and means for guiding and driving said insulation strip (3) between an insulating position covering a roofsurface of the greenhouse and a wound-up position, characterized in that the insulation strip (3) is formed by a blanket on bounded both sides by a synthetic resin foil (4) and filled with insulation material (5) and that the insulation strip (3) is arranged on an inclined roof surface (2), and is guided by means of horizontally directed rails (11), when moved towards a horizontal reel (14) for winding up said insulation strip (3), that transverse rods (6) are distributed along the length of the insulation strip, that at each said edge of the insulation strip (3) there is provided a sequence of guide members (10) co-operating with a guide rail (11), said guide members (10) being formed by channel section profiles of synthetic resin, and that the synthetic resin foil (4) has a greater length on the wound-up outer side of the insulation strip (3) than the inner side thereof and has, for this purpose, folds (13) distributed along the length of the insulation strip.

2. A greenhouse insulation apparatus as claimed in claim 1, characterized in that the insulation material (5) of the insulation strip (3) consists of polystyrene foam.

3. A greenhouse insulation apparatus as claimed in claim 1 or 2, characterized in that the synthetic resin foil (4) of the insulation strip (3) consists of a water-tight tissue of polypropylene.

4. A greenhouse insulation apparatus as claimed in any one of the preceding claims, characterized in that a horizontal and a sloping guide roller (21, 22) are arranged between the reel (14) and the roof surface (2).

5. A greenhouse insulation apparatus as claimed in any one of the preceding claims, characterized by a traction device (20) comprising at least two draw cables (23) each wound on a winch (25) and engaging an end edge (26) of the insulation strip (3).

6. A greenhouse insulation apparatus as claimed in any one of the preceding claims, characterized by a light detector (30) controlling the reel (14) and the winch (25) for winding up and off respectively the insulation strip (3).

7. A greenhouse insulation apparatus as claimed in any one of the preceding claims, characterized in that the insulation strip (3) is arranged on the outer side of the roof.

## Patentansprüche

1. Isoliervorrichtung für Gewächshäuser, die wenigstens einen Isolierstreifen (3) umfaßt sowie eine Einrichtung zum Führen und Antreiben des Isolierstreifens (3) zwischen einer Isolierstellung, welche eine Dachfläche des Gewächshauses bedeckt, und einer aufgewickelten Stellung, dadurch gekennzeichnet, daß der Isolierstreifen (3) aus einer Decke gebildet wird, die auf beiden Seiten durch eine Kunstharzfolie (4) begrenzt und mit Isoliermaterial (5) gefüllt ist, und daß der Isolierstreifen (3) auf einer geneigten Dachfläche (2) angeordnet ist und mittels horizontal gerichteter Schienen (1) geführt wird, wenn er zum Aufwickeln zu einer horizontalen Spule (14) hin bewegt wird, daß Querstangen (6) entlang der Länge des Isolierstreifens verteilt sind, daß an jeder Kante des Isolierstreifens (3) eine Reihe von Führungsgliedern (10) vorgesehen ist, die mit einer Führungsschiene (11) zusammenarbeiten und durch Rinnenquerschnitt-Profile aus Kunstharz gebildet werden, und daß die Kunstharzfolie (4) auf der aufgewickelten äußeren Seite des Isolierstreifens (3) eine größere Länge hat als auf seiner Innenseite und zu diesem Zweck Falten (13) aufweist, die über die Länge des Isolierstreifens verteilt sind.

2. Isoliervorrichtung nach Anspruch 1, dadurch gekennzeichnet, daß das Isoliermaterial (5) des Isolierstreifens (3) aus Polystyrenschaum besteht.

3. Isoliervorrichtung nach Anspruch 1 oder 2, dadurch gekennzeichnet, daß die Kunstharzfolie (4) des Isolierstreifens (3) aus einem wasserdichten Gewebe aus Polypropylen besteht.

4. Isoliervorrichtung nach einem der vorhergehenden Ansprüche, dadurch gekennzeichnet, daß eine horizontale und eine geneigte Führungswalze (21, 22) zwischen der Spule (14) und der Dachfläche (2) angeordnet sind.

5. Isoliervorrichtung nach einem der vorhergehenden Ansprüche, gekennzeichnet durch eine Ziehvorrichtung (20) mit wenigstens zwei Zugkabeln (23), von denen jedes auf eine Haspel (25) aufgewickelt ist und mit einer Endkante (26) des Isolierstreifens (3) in Eingriff steht.

6. Isoliervorrichtung nach einem der vorhergehenden Ansprüche, gekennzeichnet, durch einen Lichtdetektor (30), der die Spule (14) und die Haspel (25) steuert, um den Isolierstreifen (3) auf- bzw. abzuwickeln.

7. Isoliervorrichtung nach einem ver vorhergehenden Ansprüche, dadurch gekennzeichnet, daß der Isolierstreifen (3) auf der Außenseite des Daches angeordnet ist.

## Revendications

1. Un dispositif d'isolation de serre comprenant au moins une bande isolante (3) et des moyens pour guider et entraîner ladite bande isolante (3) entre une position d'isolation dans laquelle elle recouvre une surface de toit de la serre et une position enroulée, caractérisé en ce que la bande isolante (3) est formée par une couverture limitée sur ses deux faces par une feuille (4) de résine synthétique et remplie d'une matière isolante (5) et en ce que la bande isolante (3) est disposée sur une surface de toit inclinée (2) et est guidée au moyen de rails (11) orientés horizontalement lorsqu'elle est déplacée vers une bobine horizontale (14) servant à enrouler ladite bande isolante (3), en ce que des tiges transversales (6) sont réparties suivant la longueur de la bande isolante, en ce que, sur chaque bord de la bande isolante (3), il est prévu une succession d'organes de guidage (10) qui coopèrent avec un rail de guidage (11), lesdits organes de guidage (10) étant formés par des profilés à section en U en résine synthétique, et en ce que la feuille (4) de résine synthétique a une plus grande longueur du côté extérieur de l'enroulement de la bande isolante (3) que du côté intérieur de cet enroulement et comporte, à cette fin, des plis (13) répartis suivant la longueur de la bande isolante.

2. Un dispositif d'isolation de serre tel que revendiqué dans la revendication 1, caractérisé en ce que la matière isolante (5) de la bande isolante (3) est constituée par de la mousse de polystyrène.

3. Un dispositid d'isolation de serre selon la revendication 1 ou 2, caractérisé en ce que la feuille (4) de résine synthétique de la bande isolante (3) est constituée par un tissu étanche à l'eau de polypropylène.

4. Un dispositif d'isolation de serre selon l'une quelconque des revendications précédentes, caractérisé en ce qu'un rouleau de guidage et un rouleau incliné (21, 22) sont agencés entre la bobine (14) et la surface (2) de toit.

5. Un dispositif d'isolation de serre selon l'une quelconque des revendications précédentes, caractérisé par un dispositif de traction (20) comprenant au moins deux câbles de traction (23), chacun enroulé sur un treuil (25) et accroché à un bord d'extrémité (26) de la bande isolante (3).

6. Un dispositif d'isolation de serre selon l'une quelconque des revendications précédentes, caractérisé par un détecteur (30) de lumière commandant la bobine (14) et le treuil (25) pour enrouler et, respectivement, dérouler la bande isolante (3).

7. Un dispositif d'isolation de serre selon l'une quelconque des revendications précédentes, caractérisé en ce que la bande isolante (3) est disposée sur le côté extérieur du toit.

FIG.1

FIG.2

FIG.3

FIG.4

1

FIG. 5

FIG.6